(19) Europäisches Patentamt / European Patent Office / Office européen des brevets

(11) **EP 3 806 548 B1**

(12) **FASCICULE DE BREVET EUROPEEN**

(45) Date de publication et mention
de la délivrance du brevet:
**14.06.2023 Bulletin 2023/24**

(21) Numéro de dépôt: **20200676.3**

(22) Date de dépôt: **08.10.2020**

(51) Classification Internationale des Brevets (IPC):
**H04W 24/02** *(2009.01)*   H04W 16/02 *(2009.01)*
H04W 28/16 *(2009.01)*   H04W 48/18 *(2009.01)*

(52) Classification Coopérative des Brevets (CPC):
H04W 48/18; **H04W 24/02;** H04W 16/02;
H04W 28/16

(54) **PROCÉDÉ D'OPTIMISATION DE LA QUANTITÉ DE RESSOURCES RÉSEAU ET DU NOMBRE DE SERVICES SUSCEPTIBLES D'UTILISER LESDITES RESSOURCES**

VERFAHREN ZUR OPTIMIERUNG DER MENGE DER NETZWERKRESSOURCEN UND DER ANZAHL DER DIENSTE, DIE DIESE RESSOURCEN VORAUSSICHTLICH NUTZEN

METHOD FOR OPTIMISING THE AMOUNT OF NETWORK RESOURCES AND THE NUMBER OF SERVICES THAT ARE LIKELY TO USE SAID RESOURCES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.10.2019 FR 1911263**

(43) Date de publication de la demande:
**14.04.2021 Bulletin 2021/15**

(73) Titulaire: **Commissariat à l'énergie atomique et aux énergies alternatives 75015 Paris (FR)**

(72) Inventeurs:
• **DE DOMENICO, Antonio
38054 Grenoble Cedex 09 (FR)**
• **DANDACHI, Ghina
38054 Grenoble Cedex 09 (FR)**

(74) Mandataire: **Brevalex
Tour Trinity
1 Bis Esplanade de La Défense
CS 60347
92035 Paris La Défense Cedex (FR)**

(56) Documents cités:
**JP-A- 2018 207 190    US-A1- 2017 141 973
US-A1- 2018 317 134    US-A1- 2019 174 320**

• **SLIM FARAH ET AL: "Towards a dynamic adaptive placement of virtual network functions under ONAP", 2017 IEEE CONFERENCE ON NETWORK FUNCTION VIRTUALIZATION AND SOFTWARE DEFINED NETWORKS (NFV-SDN), IEEE, 6 novembre 2017 (2017-11-06), pages 210-215, XP033264730, DOI: 10.1109/NFV-SDN.2017.8169880 [extrait le 2017-12-07]**

**Description**

DOMAINE TECHNIQUE

L'invention se situe dans le domaine des réseaux de télécommunication virtualisés et concerne plus spécifiquement un procédé d'optimisation de la quantité de ressources réseau et du nombre de services susceptibles d'utiliser lesdites ressources.

L'invention concerne également un programme d'ordinateur mémorisé sur un support d'enregistrement et comportant des instructions pour mettre en oeuvre le procédé lorsqu'il est exécuté sur un ordinateur.

ÉTAT DE LA TECHNIQUE ANTÉRIEURE

Au cours de la dernière décennie, la révolution technologique qui caractérise les réseaux de téléphonie mobile a changé notre façon de communiquer et conduit à de nouvelles applications et services, qui caractériseront la cinquième génération de systèmes de communication (5G) et les évolutions suivantes.

Ces nouvelles applications et services sont regroupés dans trois classes de cas d'utilisation, caractérisées, chacune, par des exigences spécifiques et des indicateurs de performance clés (KPI):

- Communications ultra-fiables à faible temps de latence (URLLC),
- Communications massives de type machine (mMTC),
- Haut débit mobile amélioré (eMBB).

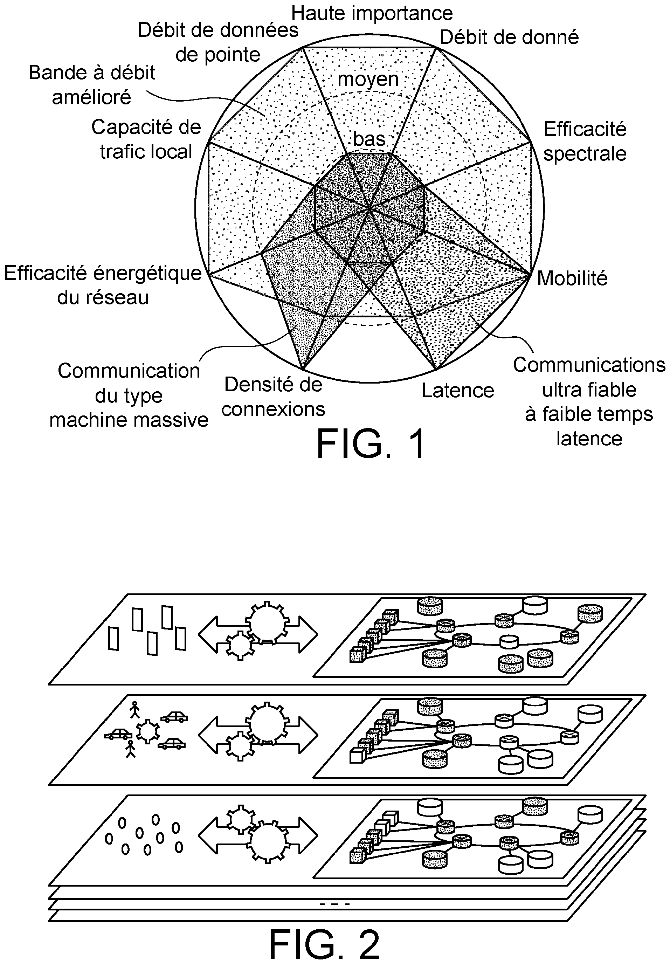

La figure 1 illustre la correspondance entre ces cas d'utilisation et les exigences qui leurs sont associées. Pour prendre en charge efficacement les cas d'utilisation et des applications ayant des exigences hétérogènes, les systèmes de communication 5G et suivants déploieront une architecture nouvelle et flexible dans laquelle l'infrastructure réseau est divisée de manière logique en différentes instances, c'est-à-dire, des tranches de réseau (network slice, en anglais), conçues, chacune, pour un service spécifique s'exécutant dans l'environnement en nuage (cloud en anglais). Une tranche de réseau est composée de fonctions de réseau physiques (PNF, pour Physical Network Functions en anglais) et de fonctions de réseau virtuelles (VNF, pour Virtual Network Functions en anglais). Une VNF représente la mise en oeuvre logicielle, c'est-à-dire fonctionnant dans un environnement cloud, des fonctions traditionnelles, telles que le routage ou la planification de paquets. Le concept de tranche de réseau est illustré schématiquement par la figure 2. Le principal organisme de normalisation en matière de découpage de réseau en tranches est le 3GPP (Third Génération Partnership Project). Ses spécifications détaillent les fonctionnalités du réseau et leur enchaînement afin de fournir ces découpages sur le réseau d'accès radio (RAN, Radio Access Network) et le réseau coeur (CN, Core Network) [3GPPTS28.531].

Outre la conception des fonctions d'accès et de coeur, l'une des tâches les plus difficiles à accomplir est d'assurer la transition d'un système OSS (pour Operating Support System) et d'un système BSS (pour Business support system) à capacités fixes à une nouvelle hiérarchie d'éléments devant traiter un écosystème très complexe tant du point de vue des utilisateurs du réseau, des tranches réseau, que des services qui ont généralement des exigences de débit et de qualité de service différentes.

En plus de la gestion, les futurs réseaux 5G et suivants nécessiteront des capacités d'orchestration, qui sont divisées en deux catégories principales, l'orchestration des services et l'orchestration des ressources. Des tâches telles que le partage d'une VNF entre des tranches réseau, leur emplacement dans une infrastructure cloud hautement hétérogène ou le nombre de processeurs coeurs alloués ne sont que quelques exemples des responsabilités de fonction de gestion et d'orchestration (M&O, Management and Orchestration).

Les fonctions liées à la gestion du cycle de vie des fonctions réseau virtuelles VNFs et à l'orchestration de leurs ressources vont au-delà de la responsabilité du groupe 3GPP. L'organisme de normalisation chargé de définir ces fonctions est l'Institut européen des normes de télécommunication (ETSI), plus précisément le groupe de normalisation de la fonction de réseau (NFV) [ETSIGR].

La figure 3 montre la correspondance entre les tranches de réseau 3GPP et les concepts introduits par ETSI NFV. Une tranche de réseau est vue du point de vue de l'ETSI comme un service réseau. La figure 4 illustre la correspondance entre tranches réseau et fonctions réseau requises. Une fonction réseau peut être dédiée à une tranche spécifique ou partagée entre plusieurs tranches. La figure 5 illustre schématiquement des fonctions réseau partagées et des fonctions réseau dédiées dans une tranche réseau.

Selon le groupe 3GPP, une tranche de réseau est un réseau logique qui s'étend sur le réseau d'accès Radio RAN et sur le réseau coeur CN. Pour gérer chaque domaine, le groupe 3GPP propose de décomposer une tranche en sous-réseaux de tranches RAN et CN et définit la fonction de gestion de tranche de réseau (NSMF, pour Network Slice Management Function) et la fonction de gestion de sous-réseau de tranche de réseau (NSSMF, pour Network Slice Subnet Management Function). Le NSMF étant l'entité responsable de la gestion d'une tranche sur plusieurs domaines et le NSSMF est l'entité chargée de la gestion des sous-réseaux de tranche dans un domaine spécifique [3GPPTS28.531]. Un sous-réseau de tranches comprend des fonctionnalités radio et des fonctionnalités coeur du réseau configurées pour fournir un comportement particulier et répondre à des exigences spécifiques. Pour créer et gérer une tranche, le NSMF (et les NSSMF) utilisent un ensemble de descripteurs prédéfinis ou un modèle. Chaque descripteur, appelé modèle NST (Network Slice Template), fournit la description des fonctionnalités et leur configuration spécifique (par exemple, les bandes de fréquences de fonctionnement). Il décrit en particulier la liste des composants NFV devant être instanciés pour configurer une instance de tranche de réseau, ainsi que d'autres informations, telles que les configurations, les étapes du cycle de vie, les actions, la surveillance, les règles, les contrats de niveau de service, etc.

Cependant, ces cadres de normalisation ne définissent que des directives sur les aspects architecturaux (interfaces et exigences) et des principes de conception sans fournir de solutions spécifiques pour la configuration et la gestion de tranches de réseau, tel que l'allocation des ressources nécessaires par le VNF, la gestion des priorités ou de la qualité du service. Par conséquent, il est nécessaire de créer de nouveaux schémas et cadres capables de gérer les ressources réseau liées à la radio, au transport et aux domaines du cloud. De plus, il est nécessaire de prendre en compte le fait que différentes demandes de tranche peuvent avoir des priorités et des contraintes différentes et que, par conséquent, les ressources du réseau doivent être gérées pour assurer une orchestration et une gestion croisées des ressources.

JP 2018 207190 concerne la fourniture à un utilisateur d'un service capable d'allouer une tranche de service adaptée à une demande d'utilisation d'un service de communication de l'utilisateur.

US 2017/141973 concerne la gestion de tranches de réseau.

Le but de l'invention est d'optimiser la gestion et l'orchestration des réseaux en évitant à la fois le sous-provisionnement et le sur-dimensionnement des ressources, qui sont respectivement les causes principales des pannes de service et des dépenses excessives pour les fournisseurs de services de communications mobiles.

## EXPOSÉ DE L'INVENTION

L'invention est mise en oeuvre au moyen d'un procédé de gestion et d'orchestration de réseau cellulaire configuré pour recevoir des demandes de déploiement de services et pour décider des tranches réseau qui peuvent être déployées / acceptées pour mettre en oeuvre ces services en fonction de leurs types / priorités, de leurs besoins en ressources, de la présence d'autres demandes simultanées et des capacités réseau disponibles (qui dépendent des tranches réseau déjà déployées).

L'objectif de l'invention est donc d'accroître l'efficacité du réseau, c'est-à-dire d'augmenter le nombre de services déployés en utilisant un ensemble donné de ressources réseau, ou de manière équivalente, de limiter la quantité de ressources requises pour satisfaire les exigences d'un ensemble donné de services. Cet objectif est atteint au moyen d'un programme d'ordinateur et d'un procédé d'optimisation de la quantité de ressources réseau et du nombre de services susceptibles d'utiliser lesdites ressources dans un réseau de télécommunication comportant les étapes suivantes :

- évaluer les similitudes entre les services susceptibles d'utiliser lesdites ressources en termes des fonctions réseau virtuelles VNFs requises pour le déploiement de chaque service,
- regrouper les services en tranches de réseau en fonction de leurs similitudes afin de maximiser le partage des ressources,
- calculer des ressources supplémentaires pour accepter des services en attente de déploiement,
- exécuter un schéma de contrôle d'admission pour accepter ou rejeter des demandes de déploiement de nouveaux services.

En identifiant et en regroupant les services ayant des besoins communs en tranches de réseau, au lieu de créer une nouvelle tranche pour chaque service demandé, le procédé selon l'invention permet de réduire les ressources consommées globalement de manière à utiliser, le cas échéant, une seule tranche pour prendre en charge les services ainsi identifiés. De cette façon, le procédé selon l'invention permet aussi de réduire le temps de déploiement d'un nouveau service réseau.

Selon l'invention, chaque service est déployé dans une tranche réseau logique (NSI) comportant au moins deux ensembles de fonctions réseau virtuelles, soit un ensemble de fonctions réseau $K^R$ qui correspondent au réseau d'accès radio RAN et un ensemble des fonctions réseau $K^C$ qui correspondent au réseau coeur.

Le procédé selon l'invention comporte en outre les étapes consistant à :

- définir un ensemble $\mathcal{K} = \mathcal{K}^R \cup \mathcal{K}^C = \{NF_1, \cdots, NF_K\}$ représentant l'ensemble de toutes les fonctions réseau K = $(K_R + K_C)$ susceptibles d'être déployées dans le réseau de télécommunication, et,

- pour un service logique donné *n* en attente de déploiement, définir une liste $D_n$ contenant les fonctions réseau requises pour le déploiement de ce service et une description des interactions entre lesdites fonctions réseau et des paramètres décrivant leurs configurations respectives,
- définir un ensemble de tranches réseau déployées comportant des fonctions réseau partagées entre au moins deux services réseau et des fonctions réseau dédiées spécifiquement à un service réseau,
- comparer les fonctions réseau requises par un service réseau en attente de déploiement avec celles de l'ensemble de NSIs susceptibles de servir le service en attente de déploiement avec un minimum de ressources réseau supplémentaires,
- évaluer les similitudes entre les fonctions réseau comparées, et,
- sur la base des similitudes évaluées, sélectionner la NSI qui partage le plus grand nombre de fonctions réseau avec le service en attente de déploiement,
- si aucune NSI partage de fonctions réseau avec le service en attente de déploiement, créer une nouvelle NSI, composée exclusivement de fonctions réseau dédiées spécifiquement au service en attente de déploiement.

En outre, on définit, pour chaque service en attente de déploiement $n \in \mathcal{N} = \{0, 1, .., N\}$, N représentant un nombre entier N≥0, un sous-ensemble $D_n$ de l'ensemble $\mathcal{K} = \mathcal{K}^R \cup \mathcal{K}^C = \{NF_1, \cdots, NF_K\}$ contenant les fonctions réseau requises pour son déploiement et un ensemble de paramètres $\mathcal{L}_{n,k}$ de configuration pour chaque fonction réseau, et, pour indiquer les fonctions réseau qui composent la nième requête $D_n$, on définit le vecteur $\lambda_n E \{0,1\}^K$, dont la k-ième entrée est définie par :

$$\lambda_{n,k} = \begin{cases} 1, & \text{si } NF_k \in \mathcal{D}_n \\ 0, & \text{sinon} \end{cases}, \forall NF_k \in \mathcal{K}.$$

Ensuite, pour chaque fonction réseau $NF_k$ appartenant à $D_n$, on représente les paramètres de configuration associés sous la forme d'un ensemble de J vecteurs binaires comme suit :

$$\mathcal{L}_{n,k} = \{l_{n,k,1}, l_{n,k,2}, \cdots, l_{n,k,J}\}.$$

Ensuite, on mappe les paramètres de configuration avec un paramètre $d_{n,k,r}$, représentant la quantité de ressources de communication, un paramètre $d_{n,k,c}$ représentant les ressources informatiques de calcul, et un paramètre $d_{n,k,m}$ représentant la capacité de stockage en cloud requise par la fonction réseau $NF_k$ de la n-ième requête de déploiement de service en utilisant un modèle composé d'une partie statique et d'une partie dynamique :

$$d_{n,k,r} = \rho_k + f_{k,r}(\mathcal{L}_{n,k}),$$

$$d_{n,k,c} = \chi_k + f_{k,c}(\mathcal{L}_{n,k}),$$

$$d_{n,k,m} = \mu_k + f_{k,m}(\mathcal{L}_{n,k}),$$

où $\rho_k$, $\chi_k$ et $\mu_k$ représentent la quantité minimale de ressources requises pour activer une fonction réseau $NF_k \in D_n$ donnée, et $f_{k,r}(\mathcal{L}_{n,k})$, $f_{k,c}(\mathcal{L}_{n,k})$, et $f_{k,m}(\mathcal{L}_{n,k})$ représentant la quantité supplémentaire de ressources nécessaires, qui dépend des paramètres de configuration $\mathcal{L}_{n,k}$ de la fonction réseau $NF_k$,

et on calcule la demande totale en ressources de communication, en ressources de calcul et en ressources de stockage cloud pour ladite n-ième requête par la formule suivante :

$$T_n = \big(d_{n,r}, d_{n,c}, d_{n,m}\big),$$

où $d_{n,r} = \sum_{NF_k \in \mathcal{D}_n} d_{n,k,r}$, $d_{n,c} = \sum_{NF_k \in \mathcal{D}_n} d_{n,k,c}$, et $d_{n,m} = \sum_{NF_k \in \mathcal{D}_n} d_{n,k,m}$ ).

L'évaluation des similitudes entre les fonctions réseau requises par une tranche réseau en attente de déploiement avec celles de l'ensemble de NSIs B déjà déployées est obtenue par le calcul d'un paramètre de similitude de Jaccard par la formule suivante:

$$\Lambda_{i,n} = \frac{\lambda_n \lambda_i}{\|\lambda_n\| + \|\lambda_i\| - \lambda_n \lambda_i}, i \in \mathcal{B},$$

où $\lambda_i$ indique les fonctions réseau qui composent la NSI $i \in \mathcal{B}$ déjà déployée, et $\|\cdot\|$ représentant un opérateur de norme euclidien.

Si aucune des NSIs déjà déployée n'est adaptée au service en attente de déploiement, une nouvelle NSI est définie.

Sur la base des similitudes calculées, on sélectionne la NSI déjà déployée $i^* \in$ B qui partage le plus grand nombre de fonctions réseau VNFs avec le service réseau en attente de déploiement $n : i^* = \underset{i \in \mathcal{B}}{\mathrm{argmax}}\, \Lambda_{i,n}$ .

Ensuite, on ajoute temporairement n à la liste des services associés à la NSI i*.

Selon l'invention, pour chaque paire de services réseau $n$, $n' \in R_{i^*,k}$, où $R_{i^*,k}$ représente l'ensemble des services inclus dans la NSI $i^* \in$ B qui nécessitent la fonction réseau $NF_k \in \mathcal{D}_n$ , on définit la similarité entre un premier ensemble de paramètres de configuration $\mathcal{L}_{n,k}$ et un deuxième ensemble de paramètres de configuration $\mathcal{L}_{n',k}$ comme suit :

$$C\big(\mathcal{L}_{n,k}, \mathcal{L}_{n',k}\big) = \sum_{j=1}^{J} h\big(l_{n,k,j}, l_{n',k,j}\big),$$

où J est le nombre de paramètres de la fonction réseau $NF_k$ et h(-) est la fonction similarité cosinus (ou mesure cosinus) qui permet de calculer la similarité entre deux vecteurs à N dimensions en déterminant le cosinus de l'angle entre eux :

$$h\big(l_{n,k,j}, l_{n',k,j}\big) = \frac{l_{n,k,j} l_{n',k,j}}{\|l_{n,k,j}\| \|l_{n',k,j}\|}.$$

Et, pour chaque fonction réseau $NF_k \in \mathcal{D}_n$ du service n, on évalue la quantité de ressources qui peut être mutualisée entre les différents services réseau déployés dans la NSI i* et le nouveau service $n$ à travers le paramètre $\sigma^*_{n,k,j}$ comme suit :

$$\sigma^*_{n,k,j} = \max_{n' \neq n \in \mathcal{R}_{i,k}} C\big(\mathcal{L}_{n,k}, \mathcal{L}_{n',k}\big), i \in \mathcal{B},$$

où l'indice $j$ représente soit les ressources de communication, soit les ressources de calcul, soit les ressources de stockage.

Selon une autre caractéristique de l'invention, on calcule les ressources nécessaires pour déployer chaque fonction du service n via la NSI i* en utilisant un modèle composé d'une partie statique et d'une partie dynamique :

$$d'_{n,k,r} = \rho_k \beta\big(\sigma^*_{n,k,j}\big) + \big(1 - \sigma^*_{n,k,j}\big) f_{k,r}\big(\mathcal{L}_{n,k}\big),$$

$$d'_{n,k,c} = \chi_k \beta\left(\sigma^*_{n,k,j}\right) + \left(1 - \sigma^*_{n,k,j}\right)f_{k,c}\left(\mathcal{L}_{n,k}\right),$$

$$d'_{n,k,m} = \mu_k \beta\left(\sigma^*_{n,k,j}\right) + \left(1 - \sigma^*_{n,k,j}\right)f_{k,m}\left(\mathcal{L}_{n,k}\right),$$

où $\beta(x)$ est la fonction caractéristique, qui est égal à 1 si $x = 0$ et est égal à 0 si $x \neq 0$, et, on calcule la demande totale en ressources de communication, en ressources de calcul et en ressources de stockage cloud pour ladite nième requête de déploiement de service comme suit :

$$T'_n = \left(d'_{n,r}, d'_{n,c}, d'_{n,m}\right),$$

où

$$d'_{n,r} = \sum\nolimits_{NF_k \in \mathcal{D}_n} d'_{n,k,r}, \; d'_{n,c} = \sum\nolimits_{NF_k \in \mathcal{D}_n} d'_{n,k,c} \text{ et } d'_{n,m} = \sum\nolimits_{NF_k \in \mathcal{D}_n} d'_{n,k,m}).$$

Dans un mode de réalisation de l'invention, on re-classe périodiquement les services préalablement déployés dans l'ensemble de NSI, via un algorithme de classification spectrale normalisé, les services étant représentés en tant que noeuds d'un graphe connecté et des grappes sont trouvées en partitionnant ce graphe en fonction de leur décomposition spectrale en sous-graphes.

Par ailleurs, on définit l'ensemble R = $\{1, \cdots, N_R\}$, des services déjà déployés avec des requêtes NF $\{\lambda_1, \cdots, \lambda_{N_R}\}$ et on calcule périodiquement une matrice d'affinité $\mathcal{A}$, dont l' élément

$$\mathcal{A}_{n,n'}$$

décrit la similarité de Jaccard entre deux services déjà déployés $n, n' \in \mathcal{R}$ comme suit :

$$\mathcal{A}_{n,n'} = \begin{cases} \Lambda_{n,n'}, & n \neq n' \\ 0, & sinon \end{cases},$$

Où $\Lambda_{n,n'}$ est calculé par $\Lambda_{i,n} = \frac{\lambda_n \lambda_i}{\|\lambda_n\| + \|\lambda_i\| - \lambda_n \lambda_i}, i \in \mathcal{B}$ .

Ensuite on déduit de $\mathcal{A}$ la matrice diagonale $S$ correspondante, dont l'élément (n, n) est la somme de la n-ième ligne de A, $S_{n,n} = \sum_{n' \in \mathcal{R}\backslash n} \Lambda_{n,n'}$ , et la matrice laplacienne normalisée associée en tant que :

$$\mathcal{L} = S^{-\frac{1}{2}} \mathcal{A} S^{-\frac{1}{2}},$$

Puis on calcule les vecteurs propres normalisés de $\mathcal{L}$ et on regroupe les k premiers vecteurs propres à l'aide de K-moyennes, le nombre de clusters k est obtenu de telle sorte que toutes les valeurs propres (1,..., k) soient très petites, mais que le (k+1)-ième soit relativement grand.

Selon l'invention, les requêtes de déploiement de nouveaux services réseau sont ordonnées en fonction :

- de leur temps d'attente dans une file d'attente puis, à partir de la plus ancienne, les requêtes qui peuvent être satisfaites en fonction de leur demande de ressources sont admises ; ou
- de la quantité moyenne de ressources demandée, puis on vérifie quelles requêtes peuvent être satisfaites, à partir de la demande caractérisée par la plus petite demande de ressources réseau.

BRÈVE DESCRIPTION DES DESSINS

D'autres caractéristiques et avantages de l'invention ressortiront de la description qui va suivre, prise à titre d'exemple non limitatif, en référence aux figures annexées dans lesquelles :

[Fig. 1] illustre la correspondance entre de nouvelles applications et services et les exigences associées à ces nouvelles applications et services dans les systèmes de communication 5G,
[Fig. 2] illustre schématiquement le concept de tranche de réseau,

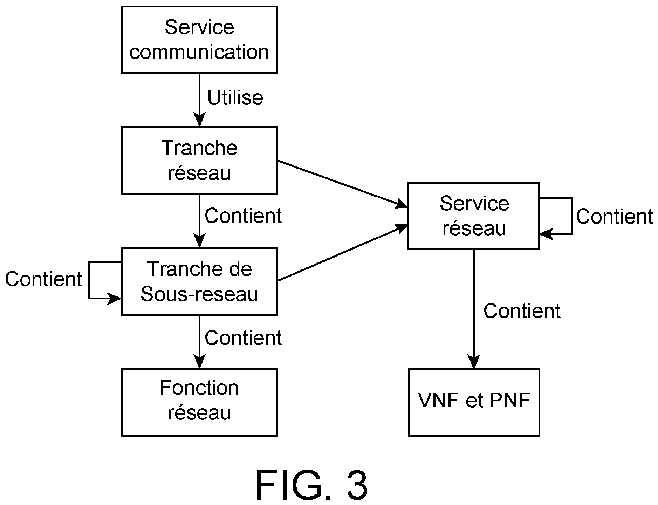

[Fig. 3] illustre la correspondance entre tranches de réseau 3GPP et les concepts de ETSI NFV (European Telecommunication Standard Institute, Network Functions Virtualisation),

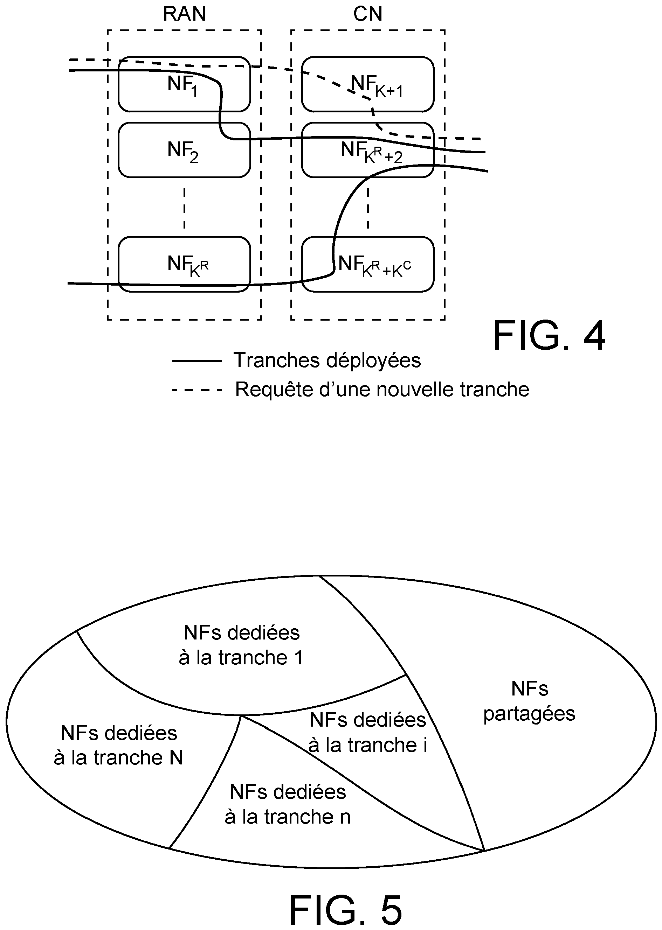

[Fig. 4] représente la correspondance des services réseau aux fonctions réseau requises,
[Fig. 5] représente une illustration de fonctions réseau partagées et de fonctions réseau dédiées dans une tranche réseau déployée (network slice instance, NSI, en anglais) qui permet la mise en oeuvre simultanée de plusieurs services,

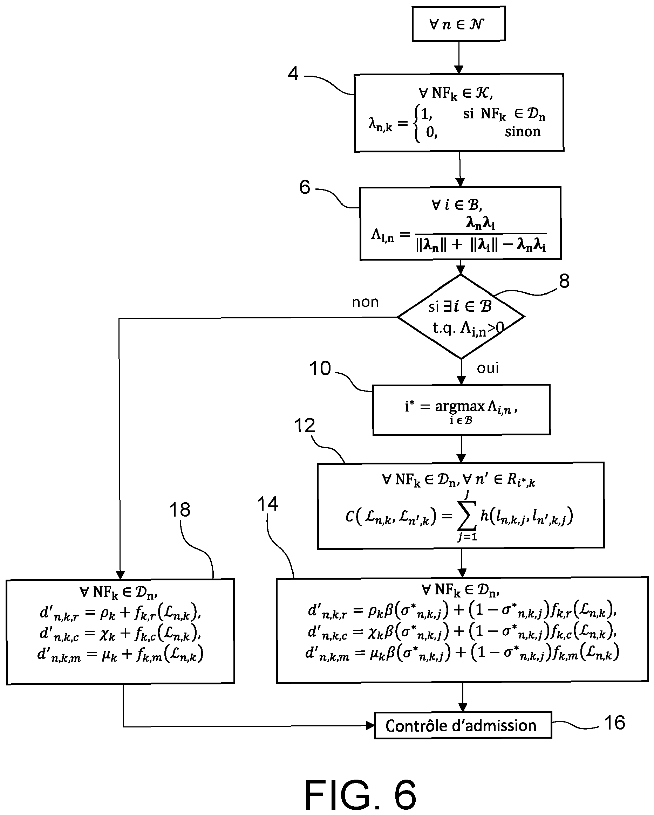

[Fig. 6] représente un premier organigramme illustrant les étapes essentielles du procédé selon l'invention,

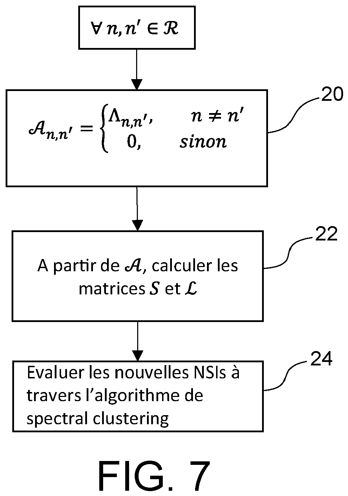

[Fig. 7] représente un deuxième organigramme illustrant les étapes d'un mode particulier de réalisation de l'invention.

EXPOSÉ DÉTAILLÉ DE MODES DE RÉALISATION PARTICULIERS

Le procédé selon l'invention sera décrit dans le cadre d'un système de gestion et d'orchestration de réseau cellulaire configuré pour recevoir des demandes de déploiement de service et pour décider d'accepter ou de refuser ces services en fonction de leurs types/priorités, de leurs besoins en ressources, de la présence d'autres demandes simultanées et des capacités réseau disponibles (qui dépendent des tranches réseau déjà déployées).

Pour plus de clarté, dans la suite de cette description, le déploiement d'une tranche réseau signifiera le déploiement des applications et services susceptibles d'être fournis dans cette tranche.

Rappelons que chaque service est déployé dans une tranche réseau logique comportant au moins deux ensembles de fonctions réseau virtuelles (VNF), soit un ensemble de fonctions réseau $K^R$ qui correspondant au réseau d'accès radio RAN et un ensemble des fonctions réseau $K^C$ correspondant au réseau coeur.

La mise en oeuvre du procédé selon l'invention sera décrite par référence à la figure 6. Préalablement, on définit un ensemble de VNFs $\mathcal{K} = \mathcal{K}^R \cup \mathcal{K}^C = \{NF_1, \cdots, NF_K\}$ représentant l'ensemble de toutes les fonctions réseau K = ($K^R$ + $K^C$) susceptibles d'être déployées dans le réseau de télécommunication, et, pour un service réseau donné, on définit un sous-ensemble $D_n$ de l'ensemble $\mathcal{K}$ contenant les fonctions réseau VNFs requises pour son déploiement et une description des interactions entre lesdites fonctions réseau et des paramètres décrivant leurs configurations respectives. Ensuite, pour indiquer les fonctions réseau VNFs requises pour le déploiement du services $n \in \mathcal{N}$, à l'étape 4 on introduit le vecteur $\lambda_n \in \{0,1\}^K$, dont la k-ième entrée est définie par :

$$\lambda_{n,k} = \begin{cases} 1, & \text{si } NF_k \in \mathcal{D}_n \\ 0, & \text{sinon} \end{cases}, \forall NF_k \in \mathcal{K}.$$

On définit ensuite l'ensemble $\mathcal{B}$ de NSIs déployées, et, pour chaque élément de cet ensemble $i \in \mathcal{B}$, le sous-ensemble de l'ensemble $\mathcal{K}$ contenant les fonctions réseau VNFs déployées pour la NSI i. Comme pour chaque service réseau, on définit, pour chaque NSI $i \in \mathcal{B}$, le vecteur $\lambda_i$ pour indiquer les fonctions réseau VNFs disponibles.

On calcule ensuite, à l'étape 6, un paramètre de similitude de Jaccard pour réaliser l'évaluation des similitudes entre les fonctions réseau requises par un service en attente de déploiement n avec celles de l'ensemble de NSIs B déjà déployées.

Le paramètre de similitude de Jaccard est défini par la formule suivante :

$$\Lambda_{i,n} = \frac{\lambda_n \lambda_i}{\|\lambda_n\| + \|\lambda_i\| - \lambda_n \lambda_i}, i \in \mathcal{B},$$

A l'étape 8, on vérifie s'il existe $i \in \mathcal{B}$, tel que $\Lambda_{i,n} > 0$.

Si oui, sur la base des similitudes calculées, à l'étape 10, on sélectionne la NSI déjà déployée $i^* \in \mathcal{B}$ qui partage le plus grand nombre de fonctions réseau VNFs avec le service réseau en attente de déploiement n :

$$i^* = \underset{i \in \mathcal{B}}{\arg\max} \, \Lambda_{i,n}.$$

Après avoir ajouté temporairement n à la liste des services associés à la NSI $i^* \in \mathcal{B}$, pour chaque paire de services *n, n'* appartenant à $R_{i^*,k}$, où $R_{i^*,k}$ représente l'ensemble des services incluses dans la NSI i* qui nécessitent la fonction réseau $\mathsf{NF}_k \in \mathcal{D}_\mathrm{n}$, à l'étape 12, on définit la similarité entre les paramètres de configuration des deux services $\mathcal{L}_{n,k}$ et $\mathcal{L}_{n',k}$ comme suit :

$$C\big(\mathcal{L}_{n,k}, \mathcal{L}_{n',k}\big) = \sum_{j=1}^{J} h\big(l_{n,k,j}, l_{n',k,j}\big),$$

où J est le nombre de paramètres de la fonction réseau $\mathsf{NF}_k$.

A l'étape 14, on détermine les ressources nécessaires afin de pouvoir déployer le service n à travers la NSI *i** sélectionnée, et à l'étape 16, on évalue si la requête de ressources associée à ce nouveau service n peut être acceptée.

S'il n'existe pas $i \in \mathcal{B}$, tel que $\Lambda_{i,n} > 0$, c'est-à-dire, si aucune des NSIs de $\mathcal{B}$ ne partage de fonctions réseau avec le service réseau en attente de déploiement *n*, à l'étape 18, on définit une nouvelle NSI et on calcule sa demande des ressources, puis on démarre le processus de contrôle d'admission pour déterminer si le service peut être déployé (étape 16).

Dans un mode particulier de réalisation de l'invention illustré par la figure 7, on re-classe périodiquement les services préalablement déployés dans l'ensemble de NSI, via un algorithme de classification spectrale normalisé, les services étant représentés en tant que noeuds d'un graphe connecté et des grappes sont trouvées en partitionnant ce graphe en fonction de leur décomposition spectrale en sous-graphes.

A cet effet, on définit l'ensemble $\mathcal{R} = \{1, \cdots, N_R\}$, des services déjà déployés avec des requêtes NF $\{\lambda_1, \cdots, \lambda_{N_R}\}$ et à l'étape 20 on calcule périodiquement une matrice d'affinité $\mathcal{A}$, dont l'élément

$$\mathcal{A}_{n,n'}$$

est la similarité de Jaccard entre deux services déjà déployés $n, n' \in \mathcal{R}$ comme suit :

$$\mathcal{A}_{n,n'} = \begin{cases} \Lambda_{n,n'}, & n \neq n' \\ 0, & sinon \end{cases},$$

où $\Lambda_{n,n'}$ est calculé par $\Lambda_{i,n} = \dfrac{\lambda_n \lambda_i}{\|\lambda_n\| + \|\lambda_i\| - \lambda_n \lambda_i}, i \in \mathcal{B}$ .

Ensuite à l'étape 22, on déduit de $\mathcal{A}$ la matrice diagonale *S* correspondante, dont l'élément (n, n) est la somme de la n-ième ligne de A, $S_{n,n} = \sum_{n' \in \mathcal{R} \backslash n} \Lambda_{n,n'}$, et la matrice laplacienne normalisée associée en tant que :

$$\mathcal{L} = S^{-\frac{1}{2}} \mathcal{A} S^{-\frac{1}{2}},$$

Puis, à l'étape 24 on calcule les vecteurs propres normalisés de $\mathcal{L}$ et on regroupe les k premiers vecteurs propres à l'aide de K-moyennes, le nombre de clusters k est obtenu de telle sorte que toutes les valeurs propres (1,..., k) soient très petites, mais que le (k+1)-ième soit relativement grand.

D'autres techniques de calcul de similarité peuvent être alternativement utilisées comme décrit dans les articles intitulés "Content caching clustering based on piecewise interest similarity," in Proc. IEEE GLOBECOM, Dec. 2017, pp. 1-6 et "Cache-aided coded multicast for correlated sources," in Proc. of 9th International Symposium on Turbo Codes and itérative Information Processing (ISTC), Sept 2016, pp. 360-364.

Préférentiellement, les requêtes de déploiement de nouveaux services réseau sont ordonnées en fonction de leur temps d'attente dans une file d'attente puis, à partir de la plus ancienne, on détermine la NSI capable de déployer ce service et la quantité des ressources réseau associée et, ensuite, les requêtes qui peuvent être satisfaites en fonction de leur demande de ressources sont admises.

En outre, on classe les requêtes de déploiement de nouveau services réseau par rapport à la quantité moyenne de ressources demandée, puis on vérifie quelles requêtes peuvent être satisfaites, à partir de la demande caractérisée par la plus petite demande de ressources réseau.

Dans une première variante de mise en oeuvre, dans l'étape de contrôle d'admission pour accepter ou rejeter des demandes de déploiement de nouveaux services, on classe les requêtes en M classes, chacune caractérisée par un gain lié à l'acceptation de déploiement $r_m$ et un coût de refus de déploiement $l_m$ $m \in M$. De plus, chaque requête de service réseau est stockée dans une file d'attente de taille $Q_m$ dédiée à sa classe. Une nouvelle demande de service est supprimée lorsque la file d'attente correspondante est pleine. Les systèmes de gestion et d'orchestration perçoivent un gain lié à l'acceptation de déploiement $r_m$ lorsqu'une demande de tranche de la classe m est acceptée et un coût de refus de déploiement $l_m$ lorsque la demande est supprimée de sa file d'attente. En conséquence, à l'instant t, on peut évaluer l'action $a_m(t)$ du contrôleur d'admission, à travers une fonction de récompense comme suit :

$$R(t) = \sum_{m \in \mathcal{M}} a_m(t)r_m - d_m(t)l_m,$$

où $d_m(t)$ indique le nombre de demandes de service de la classe m abandonnées à l'instant t, qui peut être calculé comme suit:

$$d_m(t) = \max\{s_m(t) - a_m(t) + n_m(t) - Q_m, 0\},$$

où $s_m(t)$ et $n_m(t)$ indiquent respectivement le nombre de demandes de tranche de la $m^{ième}$ classe dans la file d'attente et les demandes de tranche supplémentaires reçues à l'instant t.

Une première solution consiste à maximiser R (t) à chaque pas de temps t.

Une deuxième approche consiste à maximiser une fonction de récompense à long terme comme suit :

$$\bar{R} = \sum_{t=0}^{\infty} \gamma^t R(t)$$

où $0 < y < 1$ est un paramètre appelé facteur de réduction, qui détermine l'importance des actions à chaque pas de temps sur la fonction d'évaluation à long terme.

Un apprentissage par renforcement peut être utilisé pour optimiser la fonction $\bar{\bar{R}} = \sum_{t=0}^{\infty} \gamma^t R(t)$. A cet effet, il existe de nombreux algorithmes tels que par exemple le Q-learning.

Dans une deuxième variante de l'étape de contrôle d'admission pour accepter ou rejeter des demandes de déploiement de nouveaux services, comme pour la première variante, on classe les demandes de services dans M classes, chacune caractérisée par un gain lié à l'acceptation de déploiement $r_m$ et potentiellement par un coût de refus de déploiement $l_m$ $m \in M$. Ensuite, un contrôleur réduit momentanément la quantité de ressources pour certains des services déjà déployés, afin d'augmenter potentiellement le nombre de services pouvant être acceptés à un créneau donné. Par exemple, le contrôleur diminue les ressources allouées aux services de priorité inférieure afin de déployer de services de priorité élevé. Ceci limite le nombre de demandes abandonnées de services à faible priorité. En conséquence, un contrôleur intelligent peut maximiser une récompense prenant en compte le coût lié à la réduction des ressources allouées aux services déployés avec une priorité faible. Dans ce cas, on peut évaluer l'action $a_m(t)$ du contrôleur d'admission comme suit:

$$R(t) = \sum_{m \in \mathcal{M}} a_m(t)r_m - d_m(t)l_m - n_{cc,m}(t)l_{cc,m}$$

où $n_{cc,m}(t)$ est la quantité de ressources réduite au service $m \in M$ et $l_{cc,m}$ est le coût associé à cette action. Comme pour le mode de réalisation précédent, il est possible de simplement maximiser R(t) à chaque créneau horaire. En revanche, des algorithmes d'apprentissage par renforcement pourraient être utilisés pour optimiser l'acceptation de déploiement à long terme $\overline{R}$.

## Revendications

1. Procédé d'optimisation de la quantité de ressources réseau et du nombre de services susceptibles d'utiliser lesdites ressources dans un réseau de télécommunication virtualisé **caractérisé par** les étapes suivantes :

   - évaluer les similitudes (6) entre les services susceptibles d'utiliser lesdites ressources en termes des fonctions de réseau virtuelles, VNF, requises pour le déploiement de chaque service,
   - regrouper les services en tranches de réseau en fonction de leurs similitudes afin de maximiser le partage des ressources,
   - calculer des ressources supplémentaires (14) pour accepter des services en attente de déploiement, comprenant de nouveaux services et,
   - exécuter un schéma de contrôle d'admission (16) basé sur les similitudes pour accepter ou rejeter des demandes de déploiement des nouveaux services.

2. Procédé selon la revendication 1 dans lequel chaque service est déployé dans une tranche réseau logique, NSI, comportant au moins deux ensembles de fonctions réseau virtuelles, soit un ensemble de fonctions réseau $K^R$ qui correspondent au réseau d'accès radio RAN et un ensemble de fonctions réseau $K^C$ qui correspondent au réseau coeur.

3. Procédé selon la revendication 2 comportant en outre les étapes consistant à :
   - définir un ensemble $\mathcal{K} = \mathcal{K}^R \cup \mathcal{K}^C = \{NF_1, \cdots, NF_K\}$ représentant l'ensemble de toutes les fonctions réseau $K = (K_R + K_C)$ susceptibles d'être déployées dans le réseau de télécommunication, et,
   - pour un service logique donné $n$ en attente de déploiement, définir une liste $D_n$ contenant les fonctions réseau requises pour le déploiement de ce service et une description des interactions entre lesdites fonctions réseau et des paramètres décrivant leurs configurations respectives,
   - définir un ensemble de tranches réseau déployées comportant des fonctions réseau partagées entre au moins deux services réseau et des fonctions réseau dédiées spécifiquement à un service réseau,
   - comparer les fonctions réseau requises par le service réseau en attente de déploiement avec celles de l'ensemble de NSIs susceptibles de servir le service en attente de déploiement avec un minimum de ressources réseau supplémentaires,
   - évaluer les similitudes entre les fonctions réseau comparées, et,
   - sur la base des similitudes évaluées, sélectionner la NSI qui partage le plus grand nombre de fonctions réseau avec le service en attente de déploiement,
   - si aucune NSI partage de fonctions réseau avec le service en attente de déploiement, créer une nouvelle NSI, composée exclusivement de fonctions réseau dédiées spécifiquement au service en attente de déploiement.

4. Procédé selon la revendication 3 dans lequel, on définit, pour chaque service en attente de déploiement $n \in \mathcal{N} = \{0, 1, .., N\}$, N représentant un nombre entier N≥0, un sous-ensemble $D_n$ de l'ensemble $\mathcal{K} = \mathcal{K}^R \cup \mathcal{K}^C = \{NF_1, \cdots, NF_K\}$ contenant les fonctions réseau requises pour son déploiement et un en-

semble de paramètres $\mathcal{L}_{n,k}$ de configuration pour chaque fonction réseau, et, pour indiquer les fonctions réseau qui composent la n-ième requête $D_n$, on définit (4) le vecteur $\lambda_n \in \{0,1\}^K$, dont la k-ième entrée est définie par :

$$\lambda_{n,k} = \begin{cases} 1, & \text{si } NF_k \in \mathcal{D}_n \\ 0, & \text{sinon} \end{cases}, \forall NF_k \in \mathcal{K}.$$

ensuite, pour chaque fonction réseau $NF_k$ appartenant à $D_n$, on représente les paramètres de configuration associés sous la forme d'un ensemble de J vecteurs binaires comme suit:

$$\mathcal{L}_{n,k} = \left\{ l_{n,k,1}, l_{n,k,2}, \cdots, l_{n,k,J} \right\}.$$

ensuite, on mappe les paramètres de configuration avec un paramètre $d_{n,k,r}$, représentant la quantité de ressources de communication, un paramètre $d_{n,k,c}$ représentant les ressources informatiques de calcul, et un paramètre $d_{n,k,m}$ représentant la capacité de stockage en cloud requise par la fonction réseau $NF_k$ de la n-ième requête de déploiement de service en utilisant un modèle composé d'une partie statique et d'une partie dynamique :

$$d_{n,k,r} = \rho_k + f_{k,r}\left( \mathcal{L}_{n,k} \right),$$

$$d_{n,k,c} = \chi_k + f_{k,c}\left( \mathcal{L}_{n,k} \right),$$

$$d_{n,k,m} = \mu_k + f_{k,m}\left( \mathcal{L}_{n,k} \right),$$

où $\rho_k$, $\chi_k$ et $\mu_k$ représentent la quantité minimale de ressources requises pour activer une fonction réseau $NF_k \in D_n$ donné, et $f_{k,r}\left(\mathcal{L}_{n,k}\right), f_{k,c}\left(\mathcal{L}_{n,k}\right)$, et $f_{k,m}\left(\mathcal{L}_{n,k}\right)$ représentant la quantité supplémentaire de ressources nécessaires, qui dépend des paramètres de configuration $\mathcal{L}_{n,k}$ de la fonction réseau $NF_k$,

et on calcule la demande totale en ressources de communication, en ressources de calcul et en ressources de stockage cloud pour ladite n-ième requête par la formule suivante :

$$T_n = \left( d_{n,r}, d_{n,c}, d_{n,m} \right),$$

où

$$d_{n,r} = \sum\nolimits_{NF_k \in \mathcal{D}_n} d_{n,k,r}, \; d_{n,c} = \sum\nolimits_{NF_k \in \mathcal{D}_n} d_{n,k,c}, \text{ et } d_{n,m} = \sum\nolimits_{NF_k \in \mathcal{D}_n} d_{n,k,m}).$$

5. Procédé selon la revendication 4 dans lequel l'évaluation des similitudes entre les fonctions réseau requises par une tranche réseau en attente de déploiement avec celles de l'ensemble de NSIs $\mathcal{B}$ déjà déployées est obtenue par le calcul d'un paramètre de similitude de Jaccard par la formule suivante :

$$\Lambda_{i,n} = \frac{\lambda_n \lambda_i}{\|\lambda_n\| + \|\lambda_i\| - \lambda_n \lambda_i}, i \in \mathcal{B},$$

où $\lambda_i$ indique les fonctions réseau qui composent la NSI $i \in \mathcal{B}$ déjà déployée, et
$\|\cdot\|$ représentant un opérateur de norme euclidien.

6. Procédé selon la revendication 5 dans lequel, si aucune des NSIs déjà déployée n'est adaptée au service en attente de déploiement, une nouvelle NSI est définie (18).

**7.** Procédé selon la revendication 5 dans lequel, sur la base des similitudes calculées, on sélectionne (10) la NSI déjà déployée $i^* \in \mathcal{B}$ qui partage le plus grand nombre de fonctions réseau VNFs avec le service réseau en attente de déploiement n :

$$i^* = \underset{i \in \mathcal{B}}{\operatorname{argmax}} \Lambda_{i,n}.$$

ensuite, on ajoute temporairement n à la liste des services associés à la NSI i*.

**8.** Procédé selon la revendication 7 dans lequel, pour chaque pair de services réseau $n$, $n' \in R_{i^*,k}$, où $R_{i^*,k}$ représente l'ensemble des services inclus dans la NSI $i^* \in \mathcal{B}$ qui nécessitent la fonction réseau $\mathrm{NF}_k \in \mathcal{D}_n$, on définit la similarité entre un premier ensemble de paramètres de configuration $\mathcal{L}_{n,k}$ et un deuxième ensemble de paramètres de configuration $\mathcal{L}_{n',k}$ comme suit :

$$C\big(\mathcal{L}_{n,k}, \mathcal{L}_{n',k}\big) = \sum_{j=1}^{J} h\big(l_{n,k,j}, l_{n',k,j}\big),$$

où J est le nombre de paramètres de la fonction réseau $\mathrm{NF}_k$ et h(-) est la fonction similarité cosinus (ou mesure cosinus) qui permet de calculer la similarité entre deux vecteurs à N dimensions en déterminant le cosinus de l'angle entre eux :

$$h\big(l_{n,k,j}, l_{n',k,j}\big) = \frac{l_{n,k,j}\, l_{n',k,j}}{\|l_{n,k,j}\|\, \|l_{n',k,j}\|}.$$

**9.** Procédé selon la revendication 8, dans lequel, pour chaque fonction réseau $\mathrm{NF}_k \in \mathcal{D}_n$ du service $n$, on évalue la quantité de ressources qui peut être mutualisée entre les différents services réseau déployés dans la NSI i* et le nouveau service n à travers le paramètre $\sigma^*_{n,k,j}$ comme suit :

$$\sigma^*_{n,k,j} = \max_{n' \neq n \in \mathcal{R}_{i,k}} C\big(\mathcal{L}_{n,k}, \mathcal{L}_{n',k}\big), i \in \mathcal{B},$$

où l'indice $j$ représente soit les ressources de communication, soit les ressources de calcul, soit les ressources de stockage.

**10.** Procédé selon la revendication 9, dans lequel on calcule les ressources nécessaires pour déployer chaque fonction du service $n$ via la NSI i* en utilisant un modèle composé d'une partie statique et d'une partie dynamique :

$$d'_{n,k,r} = \rho_k \beta\big(\sigma^*_{n,k,j}\big) + \big(1 - \sigma^*_{n,k,j}\big) f_{k,r}\big(\mathcal{L}_{n,k}\big),$$

$$d'_{n,k,c} = \chi_k \beta\big(\sigma^*_{n,k,j}\big) + \big(1 - \sigma^*_{n,k,j}\big) f_{k,c}\big(\mathcal{L}_{n,k}\big),$$

$$d'_{n,k,m} = \mu_k \beta\big(\sigma^*_{n,k,j}\big) + \big(1 - \sigma^*_{n,k,j}\big) f_{k,m}\big(\mathcal{L}_{n,k}\big),$$

où $\beta(x)$ est la fonction caractéristique, qui est égal à 1 si $x = 0$ et est égal à 0 si $x \neq 0$, et, on calcule la demande totale en ressources de communication, en ressources de calcul et en ressources de stockage cloud pour ladite n-ième requête de déploiement de service comme suit :

$$T'_n = \left(d'_{n,r}, d'_{n,c}, d'_{n,m}\right),$$

où

$$d'_{n,r} = \sum\nolimits_{NF_k \in \mathcal{D}_n} d'_{n,k,r}, \; d'_{n,c} = \sum\nolimits_{NF_k \in \mathcal{D}_n} d'_{n,k,c} \text{ et } d'_{n,m} = \sum\nolimits_{NF_k \in \mathcal{D}_n} d'_{n,k,m}).$$

11. Procédé selon la revendication 3, dans lequel on re-classe périodiquement les services préalablement déployées dans l'ensemble de NSIs $\mathcal{B}$, via un algorithme de classification spectrale normalisé, les services étant représentées en tant que noeuds d'un graphe connecté et des grappes sont trouvées en partitionnant ce graphe en fonction de leur décomposition spectrale en sous-graphes.

12. Procédé selon la revendication 11 dans lequel, on définit l'ensemble R = {1, ⋯, $N_R$}, des services déjà déployées avec des requêtes NF {$\lambda_1$, ⋯, $\lambda_{NR}$} et on calcule (20) périodiquement une matrice d'affinité $\mathcal{A}$, dont les éléments sont la similarité de Jaccard entre deux services déjà déployés $n\,,n'\epsilon\,\mathcal{R}$ comme suit :

$$\mathcal{A}_{n,n'} = \begin{cases} \Lambda_{n,n'}, & n \neq n' \\ 0, & sinon \end{cases},$$

où $\Lambda_{n,n'}$ est calculé par $\Lambda_{i,n} = \frac{\lambda_n \lambda_i}{\|\lambda_n\| + \|\lambda_i\| - \lambda_n \lambda_i}, i \epsilon \mathcal{B}$ ,

ensuite, on déduit (22) de $\mathcal{A}$ la matrice diagonale $S$ correspondante, dont l'élément (n, n) est la somme de la n-ième ligne de A, $S_{n,n} = \sum_{n' \epsilon \mathcal{R}\backslash n} \Lambda_{n,n'}$ ,
et la matrice laplacienne normalisée associée en tant que :

$$\mathcal{L} = S^{-\frac{1}{2}} \mathcal{A} S^{-\frac{1}{2}},$$

puis, on calcule (24) les vecteurs propres normalisés de $\mathcal{L}$ et on regroupe les k premiers vecteurs propres à l'aide de K-moyennes, le nombre de clusters k est obtenu de telle sorte que toutes les valeurs propres (1,..., k) soient très petites, mais que le (k+1)-ième soit relativement grand.

13. Procédé selon la revendication 10 dans lequel, les requêtes de déploiement de nouveaux services réseau sont ordonnées en fonction :

- de leur temps d'attente dans une file d'attente puis, à partir de la plus ancienne, les requêtes qui peuvent être satisfaites en fonction de leur demande de ressources sont admises ; ou
- de la quantité moyenne de ressources demandée, puis on vérifie quelles requêtes peuvent être satisfaites, à partir de la demande **caractérisée par** la plus petite demande de ressources réseau.

14. Programme d'ordinateur mémorisé sur un support d'enregistrement et comportant des instructions pour mettre en oeuvre le procédé selon l'une des revendications 1 à 13 lorsqu'il est exécuté sur un ordinateur.

**Patentansprüche**

1. Verfahren zur Optimierung der Menge an Netzwerkressourcen und der Anzahl an Diensten, die diese Ressourcen voraussichtlich in einem virtualisierten Telekommunikationsnetz nutzen, durch die folgenden Schritte gekennzeichnet:

- Bewerten der Ähnlichkeiten (6) zwischen den Diensten, die die Ressourcen voraussichtlich nutzen, in Bezug auf virtuelle Netzwerkfunktionen, VNF, die für den Einsatz eines jeden Dienstes nötig sind,
- Zusammenfassen der Dienste in Netzwerktranchen in Abhängigkeit von deren Ähnlichkeiten, um die gemeinsame Nutzung der Ressourcen zu maximieren,
- Berechnen der zusätzlichen Ressourcen (14) zur Annahme der Dienste in Erwartung eines Einsatzes, die neue Dienste umfassen, und
- Ausführen eines Zugangskontrollschemas (16), das auf den Ähnlichkeiten zum Annehmen oder Ablehnen der Anfragen zum Einsatz der neuen Dienste beruht.

2. Verfahren nach Anspruch 1, wobei jeder Dienst in einer logischen Netzwerktranche, NSI, eingesetzt wird, die mindestens zwei Einheiten an virtuellen Netzwerkfunktionen beinhaltet, entweder eine Einheit an Netzwerkfunktionen $K^R$, die dem Funkzugangsnetzwerk RAN entsprechen, und eine Einheit an Netzwerkfunktionen $K^C$, die dem Kernnetzwerk entsprechen.

3. Verfahren nach Anspruch 2, das weiter die Schritte beinhaltet, bestehend aus:

- Definieren einer Einheit $\mathcal{K} = \mathcal{K}^R \cup \mathcal{K}^C = \{NF_1, ..., NF_K\}$, welche die Einheit aller Netzwerkfunktionen K = ($K_R$ + Kc) repräsentiert, die voraussichtlich in dem Telekommunikationsnetz eingesetzt werden, und,
- für einen gegebenen logischen Dienst n in Erwartung des Einsatzes, Definieren einer Liste $D_n$, die die nötigen Netzwerkfunktionen für den Einsatz dieses Dienstes und eine Beschreibung der Interaktionen zwischen den Netzwerkfunktionen und Parameter enthält, die deren jeweiligen Konfigurationen beschreiben,
- Definieren einer Einheit von eingesetzten Netzwerktranchen, die Netzwerkfunktionen beinhalten, die von mindestens zwei Netzwerkdiensten gemeinsam genutzt werden, sowie Netzwerkfunktionen, die speziell einem Netzwerkdienst zugewiesen sind,
- Vergleichen der von dem Netzwerkdienst in Erwartung des Einsatzes benötigten Netzwerkfunktionen mit jenen der Einheit an NSIs, die voraussichtlich dem Dienst in Erwartung des Einsatzes dienen, mit einem Minimum an zusätzlichen Netzwerkressourcen,
- Bewerten der Ähnlichkeiten zwischen den verglichenen Netzwerkfunktionen, und
- auf der Grundlage der bewerteten Ähnlichkeiten Auswählen der NSI, die die größte Anzahl an Netzwerkfunktionen gemeinsam mit dem Dienst in Erwartung des Einsatzes nutzt,
- wenn keine NSI Netzwerkfunktionen gemeinsam mit dem Dienst in Erwartung des Einsatzes nutzt, Erstellen einer neuen NSI, die sich ausschließlich aus Netzwerkfunktionen zusammensetzt, die speziell dem Dienst in Erwartung des Einsatzes gewidmet sind.

4. Verfahren nach Anspruch 3, wobei für jeden Dienst in Erwartung des Einsatzes $n \in \mathcal{N} = \{0, 1, .., N\}$ definiert wird, wobei $N$ eine ganze Zahl N>_0 repräsentiert, wobei eine Untereinheit $D_n$ der Einheit $\mathcal{K} = \mathcal{K}^R \cup \mathcal{K}^C = \{NF_1, ..., NF_K\}$ die nötigen Netzwerkfunktionen für deren Einsatz und eine Einheit an Parametern $\mathcal{L}_{n,k}$ zur Konfiguration für jede Netzwerkfunktion enthält, und zum Angeben der Netzwerkfunktionen, aus denen sich der n. Antrag $D_n$ zusammensetzt, der Vektor $\lambda_n \in \{0, 1\}^k$ definiert (4) wird, dessen k. Eingang definiert ist durch:

$$\lambda_{n,k} = \begin{cases} 1, & \text{wenn } NF_k \in D_n \\ 0, & \text{ansonsten} \end{cases}, \forall NF_k \in \mathcal{K}.$$

danach für jede Netzwerkfunktion $NF_k$, die $D_n$ angehört, die Konfigurationsparameter repräsentiert werden, die in Form einer Einheit von J binären Vektoren wie folgt zugewiesen sind:

$$\mathcal{L}_{n,k} = \{I_{n,k,1}, I_{n,k,2}, ..., I_{n,k,J}\}.$$

danach die Konfigurationsparameter einem Parameter $d_{n,k,r}$ zugeordnet werden, der die Menge an Kommunikationsparametern repräsentiert, einem Parameter $d_{n,k,c}$, der die Computerressourcen zum Berechnen repräsentiert, und einem Parameter $d_{n,k,m}$, der die Speicherkapazität im Cloud repräsentiert, die von der Netzwerkfunktion $NF_k$ des n. Diensteinsatzantrags benötigt wird, durch Verwenden eines Modells, das sich aus einem statischen Teil und einem dynamischen Teil zusammensetzt:

$$d_{n,r,k} = \rho_k + f_{k,r}(\mathcal{L}_{n,k}),$$

$$d_{n,k,c} = \mathcal{X}_k + f_{k,c}(\mathcal{L}_{n,k}),$$

$$d_{n,k,m} = \mu_k + f_{k,m}(\mathcal{L}_{n,k}),$$

wobei $\rho_k$, $\chi_k$ und $\mu_k$ die Mindestmenge an benötigten Ressourcen zum Aktivieren einer gegebenen Netzwerkfunktion $NF_k \in D_n$ repräsentieren, und $f_{k,r}(\mathcal{L}_{n,k})$, $f_{k,c}(\mathcal{L}_{n,k})$ und $f_{k,m}(\mathcal{L}_{n,k})$ sie zusätzliche Menge an benötigten Ressourcen repräsentieren, die von den Konfigurationsparametern $\mathcal{L}_{n,k}$ der Netzwerkfunktion $NF_k$ abhängig ist,
und die gesamte Nachfrage an Kommunikationsressourcen, an Berechnungsressourcen und an Cloud-Speicherressourcen für den n. Antrag durch die folgende Formel berechnet wird:

$$T_n = (d_{n,r}, d_{n,c}, d_{n,m}),$$

wobei

$$d_{n,r} = \Sigma_{NFk \in Dn}\, d_{n,k,r}, \; d_{n,c} = \Sigma_{NFk \in Dn}\, d_{n,k,c}, \text{ und } d_{n,m} = \Sigma_{NFk \in Dn}\, d_{n,k,r}, d_{n,k,m}).$$

**5.** Verfahren nach Anspruch 4, wobei das Bewerten der Ähnlichkeiten zwischen den von einer Netzwerktranche in Erwartung eines Einsatzes benötigten Netzwerkfunktionen mit jenen der Einheit von bereits eingesetzten NSIs $\mathcal{B}$ durch das Berechnen eines Ähnlichkeitsparameters von Jaccard durch die folgende Formel erhalten wird:

$$\Lambda_{i,n} = \frac{\lambda_n \lambda_i}{\|\lambda_n\| + \|\lambda_{ni}\| - \lambda_n \lambda_i}, \; i \in \mathcal{B},$$

wobei $\lambda_i$ die Netzwerkfunktionen anzeigt, aus denen sich die bereits eingesetzte NSI $i \in \mathcal{B}$ zusammensetzt, und $\|.\|$ einen Operator mit euklidischer Norm repräsentiert.

**6.** Verfahren nach Anspruch 5, wobei, wenn keine der bereits eingesetzten NSIs an den Dienst in Erwartung eines Einsatzes angepasst ist, eine neue NSI definiert (18) wird.

**7.** Verfahren nach Anspruch 5, wobei auf der Grundlage der berechneten Ähnlichkeiten die bereits eingesetzte NSI $i^* \in \mathcal{B}$ ausgewählt (10) wird, die die größte Anzahl an Netzwerkfunktionen VNFs gemeinsam mit dem Netzwerkdienst in Erwartung des Einsatzes n nutzt:

$$i^* = \underset{i \in \mathcal{B}}{\text{argmax}}\; \Lambda_{i,n},$$

danach vorübergehend n zur Liste der Dienste hinzugefügt wird, die der NSI i* zugewiesen sind.

**8.** Verfahren nach Anspruch 7, wobei für jedes Paar an Netzwerkdiensten $n, n', R_{i^*k}$, wobei $R_{i^*k}$ die Einheit an Diensten repräsentiert, die in der NSI $i^* \in \mathcal{B}$ eingeschlossen sind, die die Netzwerfunktion $NF_k \; E \; D_n$ benötigen, die Ähnlichkeit zwischen einer ersten Konfigurationsparametereinheit $\mathcal{L}_{n,k}$ und einer zweiten Konfigurationsparametereinheit $\mathcal{L}_{n',k}$ wie folgt definiert wird:

$$C(\mathcal{L}_{n,k}, \mathcal{L}_{n',k}) = \sum_{j=1}^{J} h(l_{n,k,j}, \; l_{n',k,j}),$$

wobei J die Anzahl an Parametern der Netzwerkfunktion $NF_k$ ist, und h(.) die Cosinus-Ähnlichkeitsfunktion (oder Cosinus-Messung) ist, die es ermöglicht, die Ähnlichkeit zwischen zwei Vektoren mit N Dimensionen durch Bestimmen des Cosinus des Winkels zueinander zu berechnen:

$$h(l_{n,k,j}, \; l_{n',k,j}) = \frac{l_{n,k,j} l_{n',k,j}}{\|l_{n,k,j}\| \; \|l_{n',k,j}\|}.$$

9. Verfahren nach Anspruch 8, wobei für jede Netzwerkfunktion $NF_k \; E \; D_n$ des Dienstes n die Menge an Ressourcen, die von den verschiedenen Netzwerkdiensten, die in der NSI i* eingesetzt sind, gemeinsam genutzt werden können, und der neue Dienst *n* anhand des Parameters $\sigma^*_{n,k,j}$ wie folgt eingeschätzt werden:

$$\sigma^*_{n,k,j} = \max_{n' \neq n \in \mathcal{R}_{i,k}} C(\mathcal{L}_{n,k}, \mathcal{L}_{n',k}), i \in \mathcal{B}$$

wobei der Index *j* entweder die Kommunikationsressourcen oder die Berechnungsressourcen oder die Speicherressourcen repräsentiert.

10. Verfahren nach Anspruch 9, wobei die Ressourcen, die für den Einsatz einer jeden Funktion des Dienstes n über die NSI i* benötigt werden, durch Verwenden eines Modells berechnet werden, das sich aus einem statischen Teil und einem dynamischen Teil zusammensetzt:

$$d'_{n,k,r} = \rho_k \beta(\sigma^*_{n,k,j}) + (1- \sigma^*_{n,k,j}) f_{k,r}(\mathcal{L}_{n,k}),$$

$$d'_{n,k,c} = \mathcal{X}_k \beta(\sigma^*_{n,k,j}) + (1- \sigma^*_{n,k,j}) f_{k,c}(\mathcal{L}_{n,k}),$$

$$d'_{n,k,m} = \mu_k \beta(\sigma^*_{n,k,j}) + (1- \sigma^*_{n,k,j}) f_{k,m}(\mathcal{L}_{n,k}),$$

wobei $\beta(\mathcal{X})$ die charakteristische Funktion ist, die gleich 1 ist, wenn $\chi=0$ ist, und gleich 0 ist, wenn $\chi \neq 0$ ist, und die gesamte Nachfrage an Kommunikationsressourcen, an Berechnungsressourcen und an Cloud-Speicherressourcen für den n. Antrag zu einem Einsatz eines Dienstes wie folgt berechnet wird:

$$T'_n = (d'_{n,r}, d'_{n,c}, d'_{n,m}),$$

wobei

$$d'_{n,r} = \sum NF_k \in D_n \; d'_{n,k,r}, \; d'_{n,c} = \sum NF_k \in D_n \; d'_{n,k,c}, \; d'_{n,m} = \sum NF_k \in D_n \; d'_{n,k,m}).$$

11. Verfahren nach Anspruch 3, wobei die zuvor in der Einheit NSIs B eingesetzten Dienste periodisch über einen normalisierten spektralen Einstufungsalgorithmus neu eingestuft werden, wobei die Dienste als Knoten eines verbundenen Graphen repräsentiert sind, und Cluster gefunden werden, indem dieser Graph in Abhängigkeit von ihrer spektralen Zerlegung in Teilgraphen partitioniert wird.

**12.** Verfahren nach Anspruch 11, wobei die Einheit R = {1, ..., $N_R$} der bereits eingesetzten Dienste mit den Anträgen NF {$\lambda_1$, ..., $\lambda_{NR}$} definiert wird, und periodisch eine Affinitätsmatrix $\mathcal{A}$, deren Elemente die Ähnlichkeit von Jaccard zwischen zwei bereits eingesetzten Diensten $n, n' \in \mathcal{R}$ sind, wie folgt berechnet (20) wird:

$$\mathcal{A}_{n,n'} = \begin{cases} \Lambda_{n,n'} & n \neq n' \\ 0, & ansonsten \end{cases},$$

wobei $\Lambda_{n,n'}$ durch $\Lambda_{i,n} = \dfrac{\lambda_n \lambda_i}{\|\lambda_n\| + \|\lambda_i\| - \lambda_n \lambda_i}, i \in \mathcal{B}$ berechnet wird,

danach von $\mathcal{A}$ die entsprechende diagonale Matrix S abgeleitet (22) wird, deren Element (n, n) die Summe der n. Zeile von A, $S_{n,n} = \Sigma_{n' \in \mathcal{R} \backslash n} \Lambda_{n,n}$, ist,
und die normalisierte Laplace-Matrix zugeordnet ist, als:

$$\mathcal{L} = \mathcal{S}^{-1/2} \mathcal{A} \mathcal{S}^{-1/2},$$

danach die normalisierten Eigenvektoren von $\mathcal{L}$ berechnet (24) werden, und die ersten k Eigenvektoren mithilfe von K-Mittelwerten zusammengefasst werden, die Anzahl an Clustern k derart erhalten wird, dass alle Eigenwerte (1, ...k) sehr klein sind, jedoch der (k+1). relativ groß ist.

**13.** Verfahren nach Anspruch 10, wobei die Einsatzanträge neuer Netzwerkdienste geordnet sind, in Abhängigkeit:

- von ihrer Wartezeit in einer Warteschleife, danach, ab der ältesten, die Anträge, die in Abhängigkeit von ihrer Ressourcennachfrage erfüllt werden können, sind zulässig; oder
- von der durchschnittlichen nachgefragten Ressourcenmenge, und danach überprüft wird, welche Anträge ausgehend von der charakterisierten Nachfrage durch die kleinste Nachfrage an Netzwerkressourcen erfüllt werden können.

**14.** Computerprogramm, das in einem Speichermedium gespeichert ist, und Anweisungen beinhaltet, um das Verfahren nach einem der Ansprüche 1 bis 13 umzusetzen, wenn es auf einem Computer ausgeführt wird.

**Claims**

**1.** A method of optimising the quantity of network resources and the number of services likely to use said resources in a virtualised telecommunications network **characterised by** the following steps of:

- evaluating the similarities (6) between the services likely to use said resources in terms of the virtual network functions, VNF, required for the instantiation of each service,
- gathering services into network slices according to their similarities in order to maximise resource sharing,
- calculating additional resources (14) to accept services awaiting instantiation, comprising new services, and,
- running an admission control scheme (16) based on similarities to accept or reject requests for the instantiation of the new services.

**2.** The method according to claim 1, wherein each service is instantiated in a logic network slice, NSI, comprising at least two sets of virtual network functions, namely a set of network functions $K^R$ which correspond to the radio access network RAN and a set of network functions $K^C$ which correspond to the core network.

**3.** The method according to claim 2 further comprising the steps of:

- defining a set $\mathcal{K} = \mathcal{K}^R \cup \mathcal{K}^C = \{NF_1, \cdots, NF_K\}$ representing the set of all the network functions K = ($K_R + K_C$) likely to be instantiated in the telecommunications network, and,
- for a given logic service n awaiting instantiation, defining a list $D_n$ containing the network functions required for the instantiation of this service and a description of the interactions between said network functions and parameters describing their respective configurations,

- defining a set of instantiated network slices comprising network functions shared between at least two network services and network functions specifically dedicated to a network service,

- comparing the network functions required by the network service awaiting instantiation with those of the set of NSIs likely to serve the service awaiting instantiation with a minimum of additional network resources,

- evaluating the similarities between the network functions being compared, and,

- based on the similarities evaluated, selecting the NSI that shares the greatest number of network functions with the service awaiting instantiation,

- if no NSI shares network functions with the service awaiting instantiation, creating a new NSI, consisting exclusively of network functions specifically dedicated to the service awaiting instantiation.

4.  The method according to claim 3, wherein, for each service awaiting instantiation, $n \in \mathcal{N} = \{0, 1, .., N\}$ is defined, N representing an integer $N \geq 0$, a subset $D_n$ of the set $\mathcal{K} = \mathcal{K}^R \cup \mathcal{K}^C = \{NF_1, \cdots, NF_K\}$ containing the network functions required for its instantiation and a set of configuration parameters $\mathcal{L}_{n,k}$ for each network function, and, to indicate the network functions that make up the n-th request $D_n$, is defined (4) the vector $\lambda_n \in \{0,1\}^K$, the k-th input of which is defined by:

$$\lambda_{n,k} = \begin{cases} 1, & \text{if } NF_k \in \mathcal{D}_n \\ 0, & \text{else} \end{cases}, \forall NF_k \in \mathcal{K}.$$

then, for each network function $NF_k$ belonging to $D_n$, the associated configuration parameters are represented as a set of J binary vectors as follows:

$$\mathcal{L}_{n,k} = \{l_{n,k,1}, l_{n,k,2}, \cdots, l_{n,k,J}\}.$$

then the configuration parameters are mapped with a parameter $d_{n,k,r}$ representing the quantity of communication resources, a parameter $d_{n,k,c}$ representing the computing resources of the calculation, and a parameter $d_{n,k,m}$ representing the cloud storage capacity required by the network function $NF_k$ of the n-th service instantiation request using a template consisting of a static and a dynamic part:

$$d_{n,k,r} = \rho_k + f_{k,r}(\mathcal{L}_{n,k}),$$

$$d_{n,k,c} = \chi_k + f_{k,c}(\mathcal{L}_{n,k}),$$

$$d_{n,k,m} = \mu_k + f_{k,m}(\mathcal{L}_{n,k}),$$

where $\rho_k$, $\chi_k$ and $\mu_k$ represent the minimum quantity of resources required to activate a given network function $NF_k \in D_n$, and $f_{k,r}(\mathcal{L}_{n,k})$, $f_{k,c}(\mathcal{L}_{n,k})$, and $f_{k,m}(\mathcal{L}_{n,k})$ representing the additional quantity of resources required, which depends on the configuration parameters. $\mathcal{L}_{n,k}$ of the network function $NF_k$,

and the total request for communication resources, computing resources and cloud storage resources for said n-th request is calculated by the following formula:

$$T_n = (d_{n,r}, d_{n,c}, d_{n,m}),$$

where

$$d_{n,r} = \sum_{NF_k \in \mathcal{D}_n} d_{n,k,r}, \; d_{n,c} = \sum_{NF_k \in \mathcal{D}_n} d_{n,k,c} \text{ and } d_{n,m} = \sum_{NF_k \in \mathcal{D}_n} d_{n,k,m}).$$

5. The method according to claim 4, wherein evaluating the similarities between the network functions required by a network slice awaiting instantiation and those of the set of NSIs $\mathcal{B}$ already instantiated is obtained by calculating a Jaccard similarity parameter by the following formula:

$$\Lambda_{i,n} = \frac{\lambda_n \lambda_i}{\|\lambda_n\| + \|\lambda_i\| - \lambda_n \lambda_i}, i \in \mathcal{B},$$

where $\lambda_i$ indicates the network functions that make up the NSI $i \in \mathcal{B}$ already instantiated, and $\|\cdot\|$ representing a Euclidean norm operator.

6. The method according to claim 5, wherein, if none of the NSIs already instantiated is adapted to the service awaiting instantiation, a new NSI is defined (18).

7. The method according to claim 5, wherein, on the basis of the similarities calculated, is selected (10) the already instantiated NSI $i^* \in \mathcal{B}$ which shares the largest number of network functions VNFs with the network service awaiting instantiation n:

$$i^* = \underset{i \in \mathcal{B}}{\operatorname{argmax}} \Lambda_{i,n}.$$

then, n is temporarily added to the list of NSI-related services i*.

8. The method according to claim 7, wherein, for each pair of network services $n, n' \in R_{i^*,k}$, where $R_{i^*,k}$ represents the set of services included in the NSI $i^* \in \mathcal{B}$ which require the network function $NF_k \in \mathcal{D}_n$, the similarity between a first set of configuration parameters and a second set of configuration parameters $\mathcal{L}_{n',k}$ is defined as follows:

$$C\left(\mathcal{L}_{n,k}, \mathcal{L}_{n',k}\right) = \sum_{j=1}^{J} h\left(l_{n,k,j}, l_{n',k,j}\right),$$

where J is the number of parameters of the network function $NF_k$, and $h(\cdot)$ is the cosine similarity function (or cosine metric) which allows calculation of the similarity between two N-dimensional vectors by determining the cosine of the angle between them:

$$h\left(l_{n,k,j}, l_{n',k,j}\right) = \frac{l_{n,k,j} l_{n',k,j}}{\|l_{n,k,j}\| \|l_{n',k,j}\|}.$$

9. The method according to claim 8, wherein for each network function $NF_k \in \mathcal{D}_n$ of the service *n,* the quantity of resources that can be pooled between the different network services instantiated in the NSI i* and the new service n through the parameter $\sigma^*_{n,k,j}$ are evaluated as follows:

$$\sigma^*_{n,k,j} = \underset{n' \neq n \, \in \, \mathcal{R}_{i,k}}{\max} C\left(\mathcal{L}_{n,k}, \mathcal{L}_{n',k}\right), i \in \mathcal{B},$$

where the subscript *j* represents either communication resources, computing resources or storage resources.

**10.** The method according to claim 9, wherein the resources required to instantiate each function of the service *n* are calculated via the NSI i* using a template consisting of a static and a dynamic part:

$$d'_{n,k,r} = \rho_k \beta\left(\sigma^*_{n,k,j}\right) + \left(1 - \sigma^*_{n,k,j}\right) f_{k,r}\left(\mathcal{L}_{n,k}\right),$$

$$d'_{n,k,c} = \chi_k \beta\left(\sigma^*_{n,k,j}\right) + \left(1 - \sigma^*_{n,k,j}\right) f_{k,c}\left(\mathcal{L}_{n,k}\right),$$

$$d'_{n,k,m} = \mu_k \beta\left(\sigma^*_{n,k,j}\right) + \left(1 - \sigma^*_{n,k,j}\right) f_{k,m}\left(\mathcal{L}_{n,k}\right),$$

where $\beta(x)$ is the characteristic function, which is equal to 1 if *x* = 0 and is equal to 0 if *x* # 0 and,
the total request for communication resources, computing resources and cloud storage resources for said n-th service instantiation request is calculated as follows:

$$T'_n = \left(d'_{n,r}, d'_{n,c}, d'_{n,m}\right),$$

where

$$d'_{n,r} = \sum\nolimits_{NF_k \in \mathcal{D}_n} d'_{n,k,r}, \; d'_{n,c} = \sum\nolimits_{NF_k \in \mathcal{D}_n} d'_{n,k,c} \text{ and } d'_{n,m} = \sum\nolimits_{NF_k \in \mathcal{D}_n} d'_{n,k,m}).$$

**11.** The method according to claim 3, wherein the services previously instantiated in the set of NSIs $\mathcal{B}$ are periodically re-classified, via a normalised spectral classification algorithm, the services being represented as nodes of a connected graph and clusters are found by partitioning this graph according to their spectral decomposition into subgraphs.

**12.** The method according to claim 11, wherein the set R = {1, ···, $N_R$) of the services already instantiated is defined with requests NF {$\lambda_1$, ···, $\lambda_{N_R}$} and an affinity matrix $\mathcal{A}$, the elements of which are the Jaccard similarity between two already instantiated services $n, n' \in \mathcal{R}$, is periodically calculated (20) as follows:

$$\mathcal{A}_{n,n'} = \begin{cases} \Lambda_{n,n'}, n \neq n' \\ 0, else \end{cases},$$

where $\Lambda_{n,n'}$ is calculated by $\Lambda_{i,n} = \frac{\lambda_n \lambda_i}{\|\lambda_n\| + \|\lambda_i\| - \lambda_n \lambda_i}, i \in \mathcal{B}$ ,

then (22) is deduced from $\mathcal{A}$ the corresponding diagonal matrix *S* the element (n, n) of which is the sum of the n-th row of A, $S_{n,n} = \sum_{n' \in \mathcal{R} \backslash n} \Lambda_{n,n'}$ ,
and the associated normalised Laplacian matrix as:

$$\mathcal{L} = S^{-\frac{1}{2}} \mathcal{A} S^{-\frac{1}{2}},$$

And then, the normalised eigenvectors of $\mathcal{L}$ are calculated (24) and the first k eigenvectors are gathered using K-means, the number of clusters k is obtained such that all the eigenvalues (1,..., k) are very small, but the (k+1)-th is relatively large.

**13.** The method according to claim 10, wherein requests for the instantiation of new network services are ordered as a function of:

 - their waiting time in a queue and then, from the oldest one, requests that can be fulfilled as a function of their request for resources are admitted; or

- the average quantity of resources requested, then which requests can be fulfilled are checked, starting from the request **characterised by** the smallest request for network resources.

14. A computer program stored on a recording medium and containing instructions for implementing the method according to any of claims 1 to 13 when run on a computer.

Haute importance

Débit de données
de pointe

Débit de donné

Bande à débit
amélioré

moyen

Capacité de
trafic local

bas

Efficacité
spectrale

Efficacité énergétique
du réseau

Mobilité

Communication
du type
machine massive

Densité de
connexions

Latence

Communications
ultra fiable
à faible temps
latence

## FIG. 1

## FIG. 2

FIG. 3



EP 3 806 548 B1

FIG. 4

—— Tranches déployées
- - - - Requête d'une nouvelle tranche

FIG. 5

$$\forall\, n \in \mathcal{N}$$

4

$$\forall\, NF_k \in \mathcal{K},$$
$$\lambda_{n,k} = \begin{cases} 1, & \text{si } NF_k \in \mathcal{D}_n \\ 0, & \text{sinon} \end{cases}$$

6

$$\forall\, i \in \mathcal{B},$$
$$\Lambda_{i,n} = \frac{\lambda_n \lambda_i}{\|\lambda_n\| + \|\lambda_i\| - \lambda_n \lambda_i}$$

8

si $\exists\, i \in \mathcal{B}$
t.q. $\Lambda_{i,n} > 0$

non    oui

10

$$i^* = \underset{i\, \in\, \mathcal{B}}{\operatorname{argmax}}\, \Lambda_{i,n}\,,$$

12

$$\forall\, NF_k \in \mathcal{D}_n, \forall\, n' \in R_{i^*,k}$$
$$C\big(\mathcal{L}_{n,k}, \mathcal{L}_{n',k}\big) = \sum_{j=1}^{J} h\big(l_{n,k,j}, l_{n',k,j}\big)$$

18

$$\forall\, NF_k \in \mathcal{D}_n,$$
$$d'_{n,k,r} = \rho_k + f_{k,r}\big(\mathcal{L}_{n,k}\big),$$
$$d'_{n,k,c} = \chi_k + f_{k,c}\big(\mathcal{L}_{n,k}\big),$$
$$d'_{n,k,m} = \mu_k + f_{k,m}\big(\mathcal{L}_{n,k}\big)$$

14

$$\forall\, NF_k \in \mathcal{D}_n,$$
$$d'_{n,k,r} = \rho_k \beta\big(\sigma^*_{n,k,j}\big) + \big(1 - \sigma^*_{n,k,j}\big) f_{k,r}\big(\mathcal{L}_{n,k}\big),$$
$$d'_{n,k,c} = \chi_k \beta\big(\sigma^*_{n,k,j}\big) + \big(1 - \sigma^*_{n,k,j}\big) f_{k,c}\big(\mathcal{L}_{n,k}\big),$$
$$d'_{n,k,m} = \mu_k \beta\big(\sigma^*_{n,k,j}\big) + \big(1 - \sigma^*_{n,k,j}\big) f_{k,m}\big(\mathcal{L}_{n,k}\big)$$

Contrôle d'admission    16

# FIG. 6

$$\forall \, n, n' \in \mathcal{R}$$

$$\mathcal{A}_{n,n'} = \begin{cases} \Lambda_{n,n'}, & n \neq n' \\ 0, & sinon \end{cases} \qquad 20$$

A partir de $\mathcal{A}$, calculer les matrices $S$ et $\mathcal{L}$ — 22

Evaluer les nouvelles NSIs à travers l'algorithme de spectral clustering — 24

# FIG. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2018207190 A

- US 2017141973 A

**Littérature non-brevet citée dans la description**

- Content caching clustering based on piecewise interest similarity. *Proc. IEEE GLOBECOM,* Décembre 2017, 1-6

- Cache-aided coded multicast for correlated sources. *Proc. of 9th International Symposium on Turbo Codes and itérative Information Processing (ISTC),* Septembre 2016, 360-364